(19) **Europäisches Patentamt / European Patent Office / Office européen des brevets**

(11) **EP 1 912 810 B1**

(12) **EUROPÄISCHE PATENTSCHRIFT**

(45) Veröffentlichungstag und Bekanntmachung des Hinweises auf die Patenterteilung:
**27.01.2010  Patentblatt 2010/04**

(21) Anmeldenummer: 06762744.8

(22) Anmeldetag: **21.07.2006**

(51) Int Cl.:
**B60G 17/016** *(2006.01)*     **B60G 21/055** *(2006.01)*

(86) Internationale Anmeldenummer:
**PCT/EP2006/007195**

(87) Internationale Veröffentlichungsnummer:
**WO 2007/017074 (15.02.2007 Gazette 2007/07)**

(54) **BETRIEBSVERFAHREN FÜR EIN EINACHSIGES WANKSTABILISIERUNGSSYSTEM EINES ZWEIACHSIGEN, ZWEISPURIGEN FAHRZEUGS**

METHOD FOR THE OPERATION OF A SINGLE-AXLE ROLL STABILIZATION SYSTEM OF A TWO-AXLE, DOUBLE-TRACK VEHICLE

PROCEDE DE FONCTIONNEMENT CONÇU POUR UN SYSTEME DE STABILISATION DE ROULIS MONOAXIAL D'UN VEHICULE A DEUX ESSIEUX ROULANT SUR DOUBLE VOIE

(84) Benannte Vertragsstaaten:
**DE FR GB IT**

(30) Priorität: **09.08.2005  DE 102005037478**

(43) Veröffentlichungstag der Anmeldung:
**23.04.2008  Patentblatt 2008/17**

(73) Patentinhaber: **Bayerische Motoren Werke Aktiengesellschaft 80809 München (DE)**

(72) Erfinder: **WEBERS, Klaus 80935 München (DE)**

(56) Entgegenhaltungen:
**EP-A- 0 827 852     EP-A- 0 829 383**
**EP-A- 1 232 884     DE-A1- 2 630 698**
**GB-A- 2 342 078     US-A1- 2002 013 645**

- **PATENT ABSTRACTS OF JAPAN Bd. 016, Nr. 405 (M-1301), 26. August 1992 (1992-08-26) & JP 04 135909 A (NISSAN MOTOR CO LTD), 11. Mai 1992 (1992-05-11)**
- **PATENT ABSTRACTS OF JAPAN Bd. 016, Nr. 471 (M-1318), 30. September 1992 (1992-09-30) & JP 04 169310 A (NISSAN MOTOR CO LTD), 17. Juni 1992 (1992-06-17)**

**Beschreibung**

Die Erfindung betrifft ein Betriebsverfahren für ein einachsiges Wankstabilisierungssystem zwischen Fahrwerk und Aufbau eines zweiachsigen, zweispurigen Fahrzeugs, wobei über einen ansteuerbaren Aktuator Energie zur Abstützung eines Wankmomentes des Aufbaus in das Fahrwerk einleitbar ist.

Bekanntlich wirken auf die Aufbaumasse eines Fahrzeugs verschiedene äußere Kräfte und Momente ein, die u.a. zu einer "Wankbewegung", d.h. zu einer rotatorischen Bewegung des Aufbaus um seine Längsachse führen. Die äußeren Kräfte werden im wesentlichen durch die Fliehkraftwirkung bei Kurvenfahrt, charakterisiert durch die aktuelle Querbeschleunigung, und durch das Überfahren asymmetrischer Straßenunebenheiten generiert. Das resultierende Wankmoment muss dabei letztlich am Radaufstandspunkt zwischen Rad und Straße abgestützt werden. Zur notwendigen Übertragung der Kräfte zwischen Aufbau und Rad werden nach dem Stand der Technik Feder-/Dämpfereinheiten vorgesehen, diese sind üblicherweise zur Übertragung der reinen Wankmomente um sog. Stabilisatoren ergänzt. Stabilisatoren sind üblicherweise als querliegende, am Aufbau drehbar gelagerte Drehstabfedern zwischen den Rädern einer Achse ausgebildet. Ein Einsatz eines Quer-Stabilisators an der Vorderachse und/oder der Hinterachse des Fahrzeugs ist möglich. Größtenteils werden sowohl Feder/Dämpfereinheiten als auch Stabilisatoren als passive Elemente, d.h. ohne Zufuhr äußerer Stellenergie, ausgebildet.

Ebenfalls als Stand der Technik zu bezeichnen sind Vorrichtungen zur "Aktiven Wankstabilisierung", mit denen unter Zufuhr äußerer Energie Wankmomente abgestützt werden. Bezüglich des konstruktiven Aufbaus sind im wesentlichen aktive Feder-/Dämpfersysteme einerseits und aktive Stabilisatoren andererseits zu unterscheiden. Jeweilige Ausprägungen können aktive Elemente an Vorderachse und Hinterachse vorsehen ("zweiachsig aktive Systeme") oder an jeweils einer Achse aktive Elemente und an der jeweils anderen Achse rein passive Elemente (sog. "einachsig aktive Systeme"). Wesentlicher Vorteil der einachsigen Systeme ist der relative Kostenvorteil gegenüber den entsprechend komplexeren zweiachsigen Wankstabilisierungssystemen.

Ein Betriebsverfahren nach dem Oberbegriff des Anspruchs 1 ist aus GB-A-2 342 078 bekannt.

Grundsätzlich werden Wankstabilisierungssysteme verwendet mit den Zielen, den komfortbestimmenden Wankwinkel des Aufbaus bei Kurvenfahrt möglichst gering zu halten (oder gänzlich zu eliminieren) und zugleich über eine geeignete Verteilung des gesamten abzustützenden Wankmomentes auf die Vorder- und Hinterachse ein geeignetes Gier- bzw. Eigenlenkverhalten des Fahrzeugs zu erzielen. Hierbei wird ausgenutzt, dass eine relativ stärkere Abstützung an einer Achse aufgrund der hiermit verbundenen Erhöhung des Normalkrafttransfers vom kurveninneren zum kurvenäußeren Rad dieser Achse in Verbindung mit der degressiven Reifen-Querkraft-Charakteristik zu einer (relativen) Verminderung der Seitenführungskräfte dieser Achse führen, bei gleichzeitiger Erhöhung der Seitenführungskräfte an der jeweils anderen Achse. In Summe führt somit eine stärkere relative Abstützung an der Vorderachse zu einem stärker untersteuernden Verhalten, im Gegensatz zu einer relativ stärkeren Abstützung an der Hinterachse, die zu einem tendenziell eher übersteuernden Verhalten führt.

Bei rein passiver Wankstabilisierung ist aufgrund der endlichen Wanksteifigkeit keine vollständige Wankkompensation möglich, d.h. bei stationärer Kurvenfahrt wird sich stets ein Wankwinkel >0° in die kurvenäußere Richtung einstellen, dessen Betrag mit zunehmender Summe der Wanksteifigkeiten an Vorderachse und Hinterachse lediglich minimiert werden kann, wobei die Wanksteifigkeit aufgrund des Zielkonflikts zur Wankreaktion auf asymmetrische Fahrbahnunebenheiten nicht beliebig erhöht werden kann. Zudem liegt bei rein passiver Wankstabilisierung das Verhältnis der Wanksteifigkeiten der Vorderachse und Hinterachse konstruktiv fest, womit direkt auch das Verhältnis der abgestützten Wankmomente bei Kurvenfahrt und somit auch die Eigenlenktendenz des Fahrzeugs fest bestimmt sind.

Im Gegensatz hierzu bieten zweiachsig-aktive Wankstabilisierungssysteme die Möglichkeit der vollständigen Wankkompensation, da rückstellende Momente nicht in Reaktion auf eine endliche Stabilisatorverdrehung, sondern aufgrund des externen Energieeintrags auch ohne jegliche äußere Verdrehung aufgebracht werden können. Zudem bieten sie bei unabhängiger Ansteuerung der Momente an Vorderachse und Hinterachse die Möglichkeit eines in weiten Bereichen beliebig einstellbaren und situationsabhängig adaptierbaren Eigenlenkverhaltens. Nachteilig sind jedoch die hohe Systemkomplexität und die damit verbundenen hohen Systemkosten.

Einachsig-aktive Wankstabilisierungssysteme bieten bei geringeren Systemkosten ebenfalls die Möglichkeit der wahlfreien Gestaltung des Wankwinkels bei Kurvenfahrt, bis hin zur vollständigen Kompensation. Nachteilig ist jedoch die unvermeidliche Verkopplung des Eigenlenkverhaltens an die Wahl des jeweiligen aktiven Wankstabilisierungsmoments. So wird insbesondere bei Zielvorgabe der Wankwinkelverringerung mit vorderachs-aktiven Systemen bei zunehmender Querbeschleunigung ein zunehmend untersteuerndes Verhalten erzeugt, d.h. das Fahrzeug wirkt bei zunehmender Querbeschleunigung abnehmend agil. Bei gleicher Zielvorgabe resultieren entsprechend hinterachs-aktive Systeme in zunehmend übersteuerndem Verhalten bei steigender Querbeschleunigung. Beide Verhaltensweisen weichen deutlich (negativ) vom sich natürlicherweise einstellenden, im wesentlichen konstanten Eigenlenkverhalten eines passiven Fahrzeugs ab.

Eine Abhilfemaßnahme für diese geschilderte Problematik aufzuzeigen, ist Aufgabe der vorliegenden Erfindung, d.h. hier wird nun ein einachsiges Wankstabilisierungssystem betrachtet und für dieses bzw. für dessen Ansteuerung soll eine Verbesserung aufgezeigt werden.

Die Lösung dieser Aufgabe ist dadurch gekennzeichnet, dass mittels des Aktuators ein einem Wankmoment entgegen gerichtetes Stabilisierungsmoment eingeleitet wird, das sich im wesentlichen als Produkt aus einem Steifigkeitsparameter und dem Wankwinkel oder einem mit hinreichender Genauigkeit dem Wankwinkel entsprechenden und aus einer messbaren Größe abgeleiteten Ersatz-Wankwinkel darstellt, wobei der Steifigkeitsparameter frei wählbar oder im Fahrbetrieb adaptierbar ist.

Hier wird somit vorgeschlagen, einachsig-aktive Wankstabilisierungssysteme derart anzusteuern, dass sich primär ein für jede Situation, d.h. bei zu- oder abnehmender Querbeschleunigung, konstantes, aber wählbares Eigenlenkverhalten bildet. Wobei die jeweilige Wahl der bestimmenden Momentenverteilung - und in Folge auch des gesamten Wankstabilisierungspotentials in einer bevorzugten Ausführungsform adaptiv bzgl. der Fahrsituation angepaßt werden kann.

Zur näheren Erläuterung wird ausgegangen von einer Wankstabilisierungskonfiguration mit einer "rein passiven Achse" mit lediglich passiven Feder/Dämpferelementen und ggf. passivem Drehstab-Stabilisator, sowie von einer "aktiven Achse" mit aktivem Wankstabilisierungs-Stellelement oder sog. Aktuator mit ggf. zusätzlich parallel wirkenden passiven Wankstabilisierungs-Elementen. Die weitere Betrachtung erfolgt anhand eines geteilten Quer-Stabilisators mit einem Schwenkmotor zum Tordieren der Stabilisator-Hälften gegen einander, jedoch gilt entsprechendes auch für andere Aktuatoren, worauf an späterer Stelle noch kurz eingegangen wird. Hierbei gilt folgende Nomenklatur:

φ = Wankwinkel
Rein passive Achse mit dem Index "1":
$M_1$ = Wankstabilisierungsmoment der rein passiven Achse

$$c_{S,1} = \frac{M_1}{\varphi}$$ Wanksteifigkeit der passiven Achse, inkl. aller wankbezogenen Linearfederraten

Aktive Achse mit dem Index "2":

$M_{2,p}$ = durch passive Anteile aufgebrachtes Wankstabilisierungsmoment der aktiven Achse
$M_A$ = Aktives Wankstabilisierungsmoment, aufgebracht durch den Aktuator

$$c_{S,2} = \frac{M_{2,p}}{\varphi} = $$ passive Wanksteifigkeit der aktiven Achse, inkl. aller wankbezogenen Linearfederraten

$$c_V = \frac{\cdots}{\varphi} = $$ "virtuelle" Wanksteifigkeit der aktiven Achse = "Steifigkeitsparameter"

Es wird vorgeschlagen, den Aktuator (bzw. die ggf. mehreren Aktuatoren) des einachsig-aktiven Wankstabilisierungssystems (z.B. im Sinne einer Sollwertvorgabe eines unterlagerten Momentenregelkreises) derart anzusteuern, dass in Abhängigkeit des Wankwinkels φ das Moment $M_A$ generiert wird, mit

$$(1) \quad M_A \doteq c_V \cdot \varphi$$

Hierbei ist $c_V$ ein im Sinne einer "virtuellen" Stabilisatorsteifigkeit beliebig wählbarer oder im Fahrbetrieb adaptierbarer Parameter, der hier "Steifigkeitsparameter" genannt wird.

Mit einem Einstellen des Aktuatormomentes entsprechend (1) ergibt sich als eigenlenkbeeinflussendes Verhältnis der Wankstabilisierungsmomente:

$$\frac{M_1}{M_2} = \frac{c_{S,1} \cdot \varphi}{c_{S,2} \cdot \varphi + c_V \cdot \varphi} = \frac{c_{S,1}}{c_{S,2} + c_V}$$

welches unabhängig bzw. konstant bezüglich des Wankwinkels ist.

Wie bereits erwähnt kann vorgesehen sein, dass der Steifigkeitsparameter $c_V$ frei wählbar ist, so dass praktisch vorgegeben werden kann, ob ein eher untersteuerndes oder ein eher übersteuerndes Fahrverhalten erwünscht ist. Besonders vorteilhaft und sicher ist jedoch eine selbsttätige Adaption (bzw. Variation) im Fahrbetrieb, vorzugsweise in Abhängigkeit von der Fahrzeuggeschwindigkeit, mit geeigneter Charakteristik. Bei aktiver Momentenübernahme an der Hinterachse, d.h. wenn der Aktuator (oder die Aktuatoren) an der Hinterachse des Fahrzeugs wirkt, sollte $c_V$ vorzugsweise ausgehend von einem hohen Wert mit steigender Geschwindigkeit monoton fallen, womit eine zu hohen Fahrgeschwindigkeiten zunehmend geringere Momentenübernahme der Hinterachse resultiert, mit der gewünschten Folge einer zunehmenden Untersteuerneigung des Fahrzeugs. Bei aktiver Momentenübernahme an der Vorderachse, d.h. wenn der Aktuator (oder die Aktuatoren) an der Vorderachse des Fahrzeugs wirkt, gilt gegenteiliges, d.h. dass der Steifigkeitsparameter ausgehend von einem niedrigeren Wert mit steigender Fahrgeschwindigkeit im wesentlichen monoton zu höheren Werten hin ansteigt.

Eine Aktuatoransteuerung entsprechend (1) setzt zunächst eine direkte Meßbarkeit des Wankwinkels φ voraus. Alternativ können bekannte Schätzverfahren zur Fahrzustandbeobachtung eingesetzt werden, um

EP 1 912 810 B1

den Wankwinkel als virtuelles Meßsignal zur Verfügung zu stellen. Alternativ kann ein sog. Ersatzwankwinkel aus der Querbeschleunigung des Fahrzeugs abgeleitet werden, d.h. diese alternative Realisierungsform basiert auf der Verwendung der üblicherweise direkt meßbaren aktuellen Querbeschleunigung $a_y$. Hierbei wird der unbekannte Wankwinkel substituiert durch

$$\varphi = \frac{a_y \cdot m \cdot h}{c_{S,2} + c_{S,1} + c_V}$$

mit den Fahrzeugparametern Aufbaumasse m und Abstand des Schwerpunktes vom Rollzentrum h. Das Aktuator(Soll-)Moment ist hierbei vorzugeben als:

$$(2)\ M_A = \frac{c_V \cdot m \cdot h}{c_{S,2} + c_{S,1} + c_V} \cdot a_y$$

Hierbei kann ebenso $c_V$ als adaptiver Parameter mit geeigneter Charakteristik vorgegeben werden - ebenfalls mit der Folge eines bezüglich der Querbeschleunigung konstanten Momentenverhältnisses,

Vorgeschlagen wird somit, ein einachsiges aktives Wankstabilisierungssystem so einzusetzen, dass mittels eines Aktuators, so bspw. eines aktiven Stabilisators, ein aktives Moment generiert wird, welches dem Momentenaufbau eines passiven Systems bzw. Stabilisators entspricht, wobei jedoch die jeweils nachgebildete Stabilisatorsteifigkeit adaptiv an die Fahrsituation, z.B. die aktuelle Längsgeschwindigkeit, angepaßt wird. Wesentlicher Vorteil hierbei ist die Konsistenz des resultierenden Eigenlenkverhaltens des einachsigen Systems in jeder Situation, d.h. dass die Verteilung der abzustützenden Wankmomente auf die Vorder- und Hinterachse unabhängig von einer Zu- oder Abnahme des Wankwinkels bzw. der Querbeschleunigung wird. Wie bereits mehrfach erwähnt kann dabei der Aktuator ein Schwenkmotor in einem geteilten Querstabilisator des Fahrwerks sein; alternativ kann der Aktuator aber auch durch zwei Stellglieder in der linken und rechten Radaufhängung des Fahrzeugs gebildet sein, mit Hilfe derer eine Fußpunktverschiebung der jeweiligen Tragfeder oder dgl. realisierbar ist.

Über die bisherigen Erläuterungen hinausgehend können auch nichtlineare Effekte bei der Berechnung der Parameter der passiven Stabilisierungselemente in die genannten Beziehungsgleichungen einbezogen werden, so bspw. in Form nichtlinearer Übersetzungskinematiken und/oder progressiv einsetzender Zusatzfedern in Abhängigkeit von (gemessenen) Höhenstandsinformationen. Auch können die (Soll)-Aktuatormomente um additive oder multiplikative Korrekturterme ergänzt werden, die in Abhängigkeit sonstiger Indikatoren ggf. kritischer Unter- /oder Übersteuerzustände eine geeignet höhere oder geringere Momentenübernahme der aktiven Achse herbeiführen. Derartige Indikatoren könnten z.B. aus einer kritischen Zunahme des Schwimmwinkels oder einer Abweichung der gemessenen Gierrate von einer vorgegebenen Soll-Gierrate bestehen, wobei noch darauf hingewiesen sei, dass dies sowie eine Vielzahl weiterer Details durchaus abweichend von obigen Erläuterungen gestaltet sein kann, ohne den Inhalt der Patentansprüche zu verlassen.

**Patentansprüche**

1. Betriebsverfahren für ein einachsiges Wankstabilisierungssystem zwischen Fahrwerk und Aufbau eines zweiachsigen, zweispurigen Fahrzeugs, wobei über einen ansteuerbaren Aktuator Energie zur Abstützung eines Wankmomentes des Aufbaus in das Fahrwerk einleitbar ist,
**dadurch gekennzeichnet, dass** mittels des Aktuators ein einem Wankmoment entgegen gerichtetes Stabilisierungsmoment eingeleitet wird, das sich im wesentlichen als Produkt aus einem Steifigkeitsparameter und dem Wankwinkel oder einem mit hinreichender Genauigkeit dem Wankwinkel entsprechenden und aus einer messbaren Größe abgeleiteten Ersatz-Wankwinkel darstellt, wobei der Steifigkeitsparameter frei wählbar oder im Fahrbetrieb adaptierbar ist und solchermaßen von der Fahrgeschwindigkeit des Fahrzeugs abhängig ist, dass dann, wenn der Aktuator an der Hinterachse des Fahrzeugs vorgesehen ist, der Steifigkeitsparameter ausgehend von einem höheren Wert mit steigender Fahrgeschwindigkeit im wesentlichen monoton zu niedrigeren Werten hin abfällt, wohingegen dann, wenn der Aktuator an der Vorderachse des Fahrzeugs vorgesehen, der Steifigkeitsparameter ausgehend von einem niedrigeren Wert mit steigender Fahrgeschwindigkeit im wesentlichen monoton zu höheren Werten hin ansteigt.

2. Betriebsverfahren nach Anspruch 1,
**dadurch gekennzeichnet, dass** der Aktuator ein Schwenkmotor in einem geteilten Querstabilisator des Fahrwerks ist.

3. Betriebsverfahren nach einem der Ansprüche 1 - 2,
**dadurch gekennzeichnet, dass** der Aktuator durch zwei Stellglieder in der linken und rechten Radaufhängung des Fahrzeugs gebildet ist, mit Hilfe derer eine Fußpunktverschiebung der jeweiligen Tragfeder oder dgl. realisierbar ist.

4. Betriebsverfahren nach einem der vorangegangenen Ansprüche,
**dadurch gekennzeichnet, dass** der Ersatzwankwinkel aus der Querbeschleunigung des Fahrzeugs abgeleitet wird.

**5.** Betriebsverfahren nach einem der vorangegangenen Ansprüche, **dadurch gekennzeichnet, dass** bei der für die Ermittlung eines Aktuator-Stabilisierungsmomentes durchgeführten Berechnung der Parameter von passiven Fahrwerks-Stabilisierungselementen nichtlineare Effekte derselben einbezogen werden.

**6.** Betriebsverfahren nach einem der vorangegangenen Ansprüche, **dadurch gekennzeichnet, dass** bei der Ermittlung eines Aktuator-Stabilisierungsmomentes zumindest ein additiver oder multiplikativer Korrekturterm insbesondere zur Berücksichtigung eines kritischen Fahrzustandes ergänzt werden.

## Claims

**1.** An operating method for a single-axle roll stabilisation system between a chassis and body of a two-axle, two-track vehicle, wherein energy for supporting a roll torque of the body can be introduced into the chassis via a controllable actuator, **characterised in that** the actuator introduces a stabilising torque, which is opposed to a roll torque and is substantially represented as a product of a rigidity parameter and the roll angle or an alternative roll angle which corresponds to the roll angle with sufficient accuracy and is derived from a measurable variable, wherein the rigidity parameter can be freely selected or adapted in driving mode and is dependent on the driving speed of the vehicle such that when the actuator is provided on the rear axle of the vehicle the rigidity parameter, starting from a higher value, drops to lower values in a substantially monotonic manner with increasing driving speed, whereas when the actuator is provided on the front axle of the vehicle, the rigidity parameter, starting from a lower value, rises to higher values in a substantially monotonic manner with increasing driving speed.

**2.** An operating method according to claim 1, **characterised in that** the actuator is an oscillating motor in a divided transverse stabiliser of the chassis.

**3.** An operating method according to either of claims 1 or 2, **characterised in that** the actuator is formed by two control elements in the left and right wheel suspension of the vehicle, with the aid of which a base point displacement of the respective suspension spring or the like can be implemented.

**4.** An operating method according to any one of the preceding claims, **characterised in that** the alternative roll angle is derived from the transverse acceleration of the vehicle.

**5.** An operating method according to any one of the preceding claims, **characterised in that** in the calculation of the parameters of passive chassis stabilisation elements carried out to determine an actuator stabilising torque, non-linear effects of said parameters are included.

**6.** An operating method according to any one of the preceding claims, **characterised in that** when determining an actuator stabilising torque, at least one additive or multiplicative correction term is included, more especially for taking into account a critical driving state.

## Revendications

**1.** Procédé de gestion d'un système de stabilisation antiroulis monoaxial entre le châssis et la carrosserie d'un véhicule à deux essieux et double voie selon lequel,
un actionneur commandé injecte l'énergie dans le châssis pour soutenir un couple de roulis de la carrosserie,
**caractérisé en ce qu'**
à l'aide de l'actionneur, on injecte un couple de stabilisation dirigé dans la direction opposée au couple de roulis, et qui correspond pour l'essentiel au produit d'un paramètre de rigidité et de l'angle de roulis ou avec une précision suffisante, à l'angle de roulis et l'angle de roulis de remplacement qui en est déduit comme grandeur mesurable,
le paramètre de rigidité pouvant être choisi librement ou adapté pendant le fonctionnement du véhicule et dépendre dans une certaine mesure de la vitesse de déplacement du véhicule,
ensuite, si l'actionneur est prévu sur l'essieu arrière du véhicule, le paramètre de rigidité diminue à partir d'une valeur élevée, avec une vitesse de circulation croissante, pour l'essentiel de manière monotone vers des valeurs plus faibles dans lesquelles en revanche, l'actionneur est prévu sur l'essieu avant du véhicule pour augmenter les paramètres de rigidité à partir d'une valeur faible, à mesure que la vitesse du véhicule augmente, vers des valeurs plus élevées selon une croissance pratiquement monotone.

**2.** Procédé de gestion selon la revendication 1,
**caractérisé en ce que**
l'actionneur est un moteur de pivotement avec un stabilisateur transversal divisé du châssis.

**3.** Procédé de gestion selon les revendications 1 et 2,
**caractérisé en ce que**
l'actionneur est formé par deux organes d'actionnement dans la suspension de roue à gauche et à droite du véhicule et peut être réalisé à l'aide d'un décalage de point de fonctionnement du ressort de support respectif ou analogue.

4. Procédé de gestion selon les revendications précédentes, **caractérisé en ce que** l'angle de roulis de remplacement est déduit de l'accélération transversale du véhicule.

5. Procédé de gestion selon les revendications précédentes, **caractérisé en ce que** pour un calcul des paramètres des éléments de stabilisation passifs du châssis, on détermine le couple de stabilisation de l'actionneur, sans introduire les effets non linéaires des éléments de stabilisation de châssis.

6. Procédé de gestion selon les revendications précédentes, **caractérisé en ce qu'** au moins un terme de correction adaptatif ou multiplicateur est notamment complété par le calcul d'un état de conduite critique pour déterminer un couple de stabilisation de l'actionneur.

**EP 1 912 810 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

* GB 2342078 A